# EUROPEAN PATENT APPLICATION

(11) **EP 4 617 243 A1**
(43) Date of publication of application: **17.09.2025**
(21) Application number: 23888560.2
(22) Date of filing: 31.10.2023
(51) Int. Cl.: C03C 17/28, C23C 26/00

(54) **COMPOSITION FOR FORMING GLASS SURFACE TREATMENT FILM**

(30) Priority: 09.11.2022 JP 2022179382
(71) Applicant: Nissan Chemical Corporation, Tokyo 103-6119 (JP)
(72) Inventor: MORIYA Shunsuke, Toyama-shi, Toyama 939-2792 (JP); KISHIOKA Takahiro, Toyama-shi, Toyama 939-2792 (JP); KAMIBAYASHI Satoshi, Toyama-shi, Toyama 939-2792 (JP); SAKAMOTO Rikimaru, Toyama-shi, Toyama 939-2792 (JP)
(74) Representative: Hoffmann Eitle
(86) International application number: PCT/JP2023/039186
(87) International publication number: WO 2024/101212

(57) **Abstract**

This composition for forming a glass surface treatment film includes a conductive substance and a solvent and the glass surface treatment film is used to hold a glass substrate by an electrostatic adsorption method.

## Description

### Technical Field

The present invention relates to a composition for forming a glass surface treatment film that facilitates electrostatic adsorption onto a glass substrate.

### Background Art

Workpieces such as semiconductor wafers or glass substrates used for manufacturing a display are transferred to another processing step after predetermined processing on each workpiece is completed. At that time, a transfer apparatus is used.

A transfer apparatus including an adsorption head that performs adsorption and holding in a non-contact manner has been proposed (see, for example, Patent Literature 1.). In this proposed technology, the adsorption head injects air from an air injection hole formed in the head main body toward a glass plate, and sucks, hangs, and holds the glass plate as a workpiece in a non-contact manner while using a negative pressure generated by the flow of the air (i.e., by using the Bernoulli effect).

### Citation List

### Patent Literature

Patent Literature 1: JP 10-181879 A

### Summary of Invention

### Technical Problem

In each step such as transport, exposure, film formation (e.g., CVD and sputtering), microfabrication, cleaning, etching, and dicing of a semiconductor wafer, an electrostatic adsorption method is also used to adsorb and hold the semiconductor wafer.

The electrostatic adsorption method is a method of holding a workpiece by an electrostatic force based on a potential difference between a workpiece (e.g., a semiconductor wafer) and an electrode (sample stage). The electrostatic chuck by the electrostatic adsorption method has advantages that there is no contamination on the wafer due to contact when compared with a mechanical holding method using clamping or the like, and temperature control of the wafer is easy because the entire back surface of the workpiece is adsorbed. Examples of the electrostatic chuck include a Coulomb force type, in which an insulating material is used as a dielectric, and a Jonson-Rahbek force type, in which a minute current flows through the interface between a workpiece and a dielectric and charging polarization is thus induced. In addition, examples of the electrostatic adsorption method include a monopole (monopolar) method, in which an electrostatic adsorption voltage is applied to one electrode, and a dipole (bipolar) method, in which two or more electrodes are provided and electrostatic adsorption voltages having different polarities are generally applied.

However, when the electrostatic adsorption method is applied to hold a glass substrate as an insulator, it is necessary to increase an applied voltage as compared with a semiconductor such as a silicon wafer, which is not easy.

The present invention has been made in view of such circumstances, and the purpose of the present invention is to provide a composition for forming a glass surface treatment film that can facilitate holding of a glass substrate by using an electrostatic adsorption method, a laminate obtained using the composition for forming a glass surface treatment film, a method for producing a laminate by using the composition for forming a glass surface treatment film, and a method of removing a glass surface treatment film while using the laminate.

### Solution to Problem

As a result of intensive studies to solve the above problem, the present inventors have found that the above problem can be solved, thereby completing the present invention having the following items.

That is, the present invention includes the following.
[1] A composition for forming a glass surface treatment film, including a conductive substance and a solvent, wherein the glass surface treatment film is used to hold a glass substrate by an electrostatic adsorption method.
[2] The composition for forming a glass surface treatment film according to item 1, further including a polymer.
[3] The composition for forming a glass surface treatment film according to [2], wherein the polymer is a water-soluble polymer or an alkali-soluble polymer.
[4] The composition for forming a glass surface treatment film according to any one of [1] to [3], wherein the conductive substance is at least one material selected from the group consisting of surfactants and ionic liquids.
[5] The composition for forming a glass surface treatment film according to any one of [1] to [3], wherein the conductive substance is a conductive polymer.
[6] The composition for forming a glass surface treatment film according to any one of [1] to [3], wherein the conductive substance is at least one material selected from the group consisting of carbon-based, metal-based, metal-oxide-based, metal-coated, and metal-oxide-coated conductive fillers.
[7] The composition for forming a glass surface treatment film according to any one of [1] to [6], wherein the solvent contains at least one material selected from the group consisting of alkylene glycol monoalkyl ethers, monocarboxylic acid esters of alkylene glycol monoalkyl ethers, and water.
[8] The composition for forming a glass surface treatment film according to any one of [1] to [7], further including a crosslinking agent.
[9] A glass surface treatment film formed from the composition for forming a glass surface treatment film according to any one of [1] to [8].
[10] A laminate including a glass substrate and the glass surface treatment film according to [9].
[11] A method for producing a laminate, the method including the step of forming a glass surface treatment film on a surface of a glass substrate by using the composition for forming a glass surface treatment film according to any one of [1] to [8].
[12] A method of removing a glass surface treatment film, including the step of applying a removal liquid, namely either water or an alkali aqueous solution, to the laminate according to claim 10 to remove the glass surface treatment film from the glass substrate.

### Advantageous Effects of Invention

The present invention can provide a composition for forming a glass surface treatment film that can facilitate holding of a glass substrate by using an electrostatic adsorption method, a laminate obtained using the composition for forming a glass surface treatment film, a method for producing a laminate by using the composition for forming a glass surface treatment film, and a method of removing a glass surface treatment film while using the laminate.

### Description of Embodiments

### (Composition for forming glass surface treatment film)

The composition for forming a glass surface treatment film according to the present invention contains a conductive substance and a solvent.

The composition for forming a glass surface treatment film may further contain a polymer.

The composition for forming a glass surface treatment film is a composition for forming a glass surface treatment film used to hold a glass substrate by an electrostatic adsorption method.

A glass surface treatment film is formed from the composition for forming a glass surface treatment film of the present invention. The glass surface treatment film may be formed on a surface of a glass substrate, thereby lowering the surface resistivity of the surface. As a result, the holding of the glass substrate by using the electrostatic adsorption method can be facilitated.

The surface resistivity of the glass surface treatment film formed from the composition for forming a glass surface treatment film is, for example, preferably 1.0 × 10¹² Ω/□ or less and more preferably 5.0 × 10¹¹ Ω/□ or less. The surface resistivity of the glass surface treatment film may be 1.0 × 10⁴ Ω/□ or more, 1.0 × 10⁶ Ω/□ or more, or 1.0 × 10⁸ Ω/□ or more.

In addition, the surface resistivity (SR) of the glass surface treatment film formed from the composition for forming a glass surface treatment film is provided such that the ratio (SR/SR_{G}) of the surface resistivity (SR) to the surface resistivity (SR_{G}) of the glass substrate on which the glass surface treatment film is disposed is preferably 1/10 or less in terms of the surface resistivity and more preferably 1/10² or less in terms of the surface resistivity. The lower limit of the ratio (SR/SR_{G}) is not particularly limited, but the ratio (SR/SR_{G}) may be 1/10⁸ or more, 1/10⁶ or more, or 1/10⁴ or more.

The surface resistivity may be measured by, for example, a double ring electrode (two-terminal) method using a surface resistance meter (e.g., MEGARESTAII, manufactured by SHISHIDO ELECTROSTATIC, LTD.; measurement voltage: 500 V).

When the conductive substance contained has film-forming properties, the composition for forming a glass surface treatment film does not necessarily contain a non-conductive polymer as a film-forming component.

For example, the conductive substance contained in the composition for forming a glass surface treatment film may be a conductive polymer and the conductive polymer may have film-forming properties. In this case, the composition for forming a glass surface treatment film does not have to contain a non-conductive polymer as a film-forming component.

On the other hand, the conductive substance contained in the composition for forming a glass surface treatment film may be an inorganic substance. In this case, usually, the inorganic substance has no film-forming property. Thus, the composition for forming a glass surface treatment film preferably contain a non-conductive polymer as a film-forming component.

### <Conductive substance>

The conductivity of the conductive substance is not particularly limited as long as the surface resistivity of the glass surface treatment film formed from the composition for forming a glass surface treatment film can be made smaller than the surface resistivity of the glass substrate on which the glass surface treatment film is disposed.

The conductive substance may be an organic substance or an inorganic substance.

Examples of the organic substance include a surfactant, an ionic liquid, or a conductive polymer.

Examples of the surfactant include a cationic surfactant, an anionic surfactant, a zwitterionic surfactant, or a nonionic surfactant. The surfactant may be a polymer surfactant. Note that the surfactant is a common name that is widely used in the compounds exemplified below as specific examples. The cationic surfactant may be referred to as a cationic conductive organic compound. The anionic surfactant may be referred to as an anionic conductive organic compound. The zwitterionic surfactant may be referred to as a zwitterionic conductive organic compound. The nonionic surfactant may be referred to as a nonionic conductive organic compound. The polymer surfactant may be referred to as a polymer conductive organic compound.

Examples of the cationic surfactant include an alkylamine salt, a quaternary ammonium salt, an alkylpyridium salt, or an alkylimidazolium salt.

Examples of the anionic surfactant include: alkylbenzenesulfonic acids and salts thereof (e.g., dodecylbenzenesulfonic acid, ammonium dodecylbenzenesulfonate); alkylnaphthalenesulfonic acids and salts thereof (e.g., propylnaphthalenesulfonic acid, triisopropylnaphthalenesulfonic acid); alkyl phenyl ether disulfonic acids and salts thereof (e.g., dodecyl phenyl ether disulfonic acid, alkyl diphenyl ether sulfonic acid); alkyl diphenyl ether disulfonic acids and salts thereof (e.g., dodecyl diphenyl ether disulfonic acid, ammonium dodecyl diphenyl ether sulfonate); dialkylnaphthalenedisulfonic acids and salts thereof (e.g., dinonylnaphthalenedisulfonic acid); phenolsulfonic acid-formalin condensates and salts thereof; arylphenol sulfonic acid-formalin condensates and salts thereof; carboxylates (e.g., decane carboxylic acid, N-acyl amino acid salt, polyoxyethylene or polyoxypropylene alkyl ether carboxylate); acylated peptides; sulfonates; sulfuric acid ester salts (e.g., sulfated oils, alkyl sulfates, alkyl ether sulfates, polyoxyethylene or polyoxypropylene alkyl aryl ether sulfates, alkyl amide sulfates); phosphoric acid ester salts; alkyl phosphates; polyoxyethylene or polyoxypropylene alkyl aryl ether phosphates; ammonium lauryl sulfate; sodium lauryl sulfate (sodium dodecyl sulfate); sodium lauryl ether sulfate (SLES); sodium myreth sulfate; dioctyl sodium sulfosuccinate; octane sulfonate; perfluorooctane sulfonate (PFOS); perfluorobutanesulfonate; alkyl benzene sulfonate; alkyl aryl ether phosphate; alkyl ether phosphate; alkyl carboxylate; fatty acid salts (soap); sodium stearate; sodium lauroyl sarcosinate; perfluorononanoate; perfluorooctanoate; and mixtures thereof.

Examples of the nonionic surfactant include: sugar ester-based surfactants (e.g., sorbitan fatty acid ester, polyoxyethylene sorbitan fatty acid ester); fatty acid ester-based surfactants (e.g., polyoxyethylene resin acid ester, polyoxyethylene fatty acid diethyl); ether-based surfactants (e.g., polyoxyethylene alkyl ether, polyoxyethylene alkylphenyl ether, polyoxyethylene-polypropylene glycol); or aromatic nonionic surfactants (e.g., polyoxyalkylene octylphenyl ether, polyoxyalkylene nonylphenyl ether, polyoxyalkyldibutylphenyl ether, polyoxyalkylstyrylphenyl ether, polyoxyalkylbenzylphenyl ether, polyoxyalkylbisphenyl ether, polyoxyalkylcumylphenyl ether). Examples of the alkyl include a C₁₋₂₀ alkyl.

The ionic liquid refers to a molten salt (ionic compound) that is liquid at room temperature (25°C).

The ionic liquid is composed of a cationic component and an anionic component, and the cationic component and the anionic component are not particularly limited, and those used in typical ionic liquids are used.

Examples of the cationic component include a pyridinium cation, a piperidinium cation, a pyrrolidinium cation, a cation having a pyrroline skeleton, a cation having a pyrrole skeleton, an imidazolium cation, a 1,3-dimethylimidazolium cation, a tetrahydropyrimidinium cation, a dihydropyrimidinium cation, a pyrazolium cation, a pyrazolinium cation, a tetraalkylammonium cation, a trialkylsulfonium cation, a tetraalkylphosphonium cation, a phosphonium cation, or a sulfide cation.

Examples of the anionic component include Cl⁻, Br⁻, AlCl₄⁻, Al₂Cl₇⁻, BF₄⁻, PF₆⁻, ClO₄⁻, NO₃⁻, CH₃COO⁻, CF₃COO⁻, CH₃SO3⁻, CH₃SO₄⁻, CF₃SO₃⁻, (CF₃SO₂)₂N⁻, (CF₃SO₂)₃C⁻, AsF₆⁻, SbF₆⁻, NbF₆⁻, TaF₆⁻, F(HF)ₙ⁻, (CN)₂N⁻, C₄F₉SO₃⁻, (C₂F₅SO₂)₂N⁻, C₃F₇COO⁻, (CF₃SO₂)(CF₃CO)N⁻, (CₙF₂ₙ₊₁SO₂)₂N⁻ (n is an integer of 1 to 10), CF₂(CₘF₂ₘSO₂)₂N⁻ (m is an integer of 1 to 10),-O₃S(CF₂)ₗSO₃⁻ (l is an integer of 1 to 10), (CₚF₂ₚ₊₁SO₂)(C_{q}F_{2q+1}SO₂)N⁻ (p and q are each an integer of 1 to 10), or (FSO₂)₂N⁻.

The conductive polymer is not particularly limited. The conductive polymer may be a complex with a dopant.

Examples of the conductive polymer include polythiophene, polyaniline, polypyrrole, polyquinoxaline, polyacetylene, polyphenylenevinylene, polynaphthalene, and derivatives thereof.

The conductive polymer may have a hydrophilic functional group. Examples of the hydrophilic functional group include a sulfone group, an amino group, an amido group, an imino group, a hydroxyl group, a mercapto group, a hydrazino group, a carboxy group, a sulfate group, a phosphate group, and salts thereof (e.g., a quaternary ammonium base). When the conductive polymer has a hydrophilic functional group, the conductive polymer tends to be easily soluble in water, or the particulate conductive polymer tends to be easily dispersed in water.

From the viewpoint of conductivity and chemical stability, the conductive polymer is preferably poly(3,4-disubstituted thiophene). Examples of the poly(3,4-disubstituted thiophene) include poly(3,4-alkylenedioxythiophene) and poly(3,4-dialkoxythiophene). Preferred is poly(3,4-alkylenedioxythiophene). The poly(3,4-alkylenedioxythiophene) has, for example, a structural unit represented by the following formula (I).

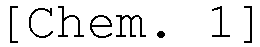

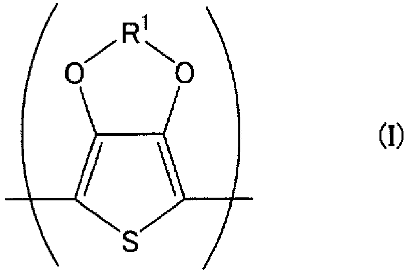

In formula (I), R¹ is, for example, a C₁₋₄ alkylene group. The alkylene group may be linear or branched. Examples of the alkylene group include a methylene group, a 1,2-ethylene group, a 1,3-propylene group, a 1,4-butylene group, a 1-methyl-1,2-ethylene group, a 1-ethyl-1,2-ethylene group, a 1-methyl-1,3-propylene group, and a 2-methyl-1,3-propylene group. The alkylene group is preferably a methylene group, a 1,2-ethylene group, or a 1,3-propylene group, and more preferably a 1,2-ethylene group.

The conductive polymer is preferably poly(3,4-ethylenedioxythiophene) (PEDOT).

Examples of the dopant include a polyanion. The conductive polymer may be polythiophene (or a derivative thereof). In this case, the polyanion forms an ion pair with polythiophene (or a derivative thereof), and the polythiophene (or derivative thereof) can be stably dispersed in water.

Examples of the polyanion include, but are not particularly limited to, carboxylic acid polymers (e.g., polyacrylic acid, polymaleic acid, polymethacrylic acid); or sulfonic acid polymers (e.g., polystyrene sulfonic acid, polyvinyl sulfonic acid, polyisoprene sulfonic acid).

The polyanion may be a copolymer of a vinyl carboxylic acid compound or a vinyl sulfonic acid compound and another monomer compound. Examples of the other monomer compound include a (meth)acrylate compound; or an aromatic vinyl compound (e.g., styrene, vinylnaphthalene).

The polyanion is particularly preferably polystyrene sulfonic acid (PSS).

Examples of the conductive polymer as a complex with a dopant include a complex (PEDOT/PSS) of poly(3,4-ethylenedioxythiophene) and polystyrene sulfonic acid.

Examples of the inorganic substance include an inorganic conductive filler.

Examples of the inorganic conductive filler include a carbon-based, metal-based, metal-oxide-based, metal-coated, or metal-oxide-coated conductive filler.

Examples of the carbon-based conductive filler include ketjen black, acetylene black, and oil-furnace black.

Examples of the metal constituting the metal-based conductive filler include Ag, Ni, Cu, Zn, Al, and stainless steel.

Examples of the metal oxide constituting the metal oxide-based conductive filler include SnO₂, In₂O₃, and ZnO.

Examples of the metal-coated conductive filler include a filler in which Ni, Al, or the like is used as a coating material and a base filler is used.

Examples of the metal oxide-coated conductive filler include a filler in which SnO₂, In₂O₃, ZnO, or the like is used as a coating material and a base filler is used.

Examples of the base filler include mica, glass beads, glass fiber, carbon fiber, calcium carbonate, zinc oxide, and titanium oxide.

The content of the conductive substance in the composition for forming a glass surface treatment film is not particularly limited, but is preferably 1 mass% to 100 mass%, more preferably 2 mass% to 100 mass%, and particularly preferably 5 mass% to 100 mass% based on the film constituent.

The film constituent refers to components constituting the glass surface treatment film. In other words, the film constituent refers to components obtained by removing a solvent from all components of the composition for forming a glass surface treatment film.

The composition for forming a glass surface treatment film may contain a polymer (nonconductive polymer). In this case, the content of the conductive substance in the composition for forming a glass surface treatment film is not particularly limited, but is preferably 1 mass% to 90 mass%, more preferably 2 mass% to 50 mass%, and particularly preferably 5 mass% to 35 mass% based on the film constituent.

The composition for forming a glass surface treatment film may contain a polymer (nonconductive polymer). In this case, the content of the conductive substance in the composition for forming a glass surface treatment film is not particularly limited, but is preferably 1 mass% to 1000 mass%, more preferably 2 mass% to 100 mass%, and particularly preferably 5 mass% to 50 mass% based on the polymer.

The composition for forming a glass surface treatment film may be free of a polymer (nonconductive polymer). In this case, the content of the conductive substance in the composition for forming a glass surface treatment film is not particularly limited, but is preferably 75 mass% to 100 mass%, more preferably 80 mass% to 100 mass%, and particularly preferably 85 mass% to 100 mass% based on the film constituent.

### <Polymer>

The polymer is used, for example, for imparting film-forming properties to the glass surface treatment film.

The polymer is not particularly limited, but a water-soluble polymer or an alkali-soluble polymer is preferable from the viewpoint of excellent removability of the glass surface treatment film.

Among the components contained in the composition for forming a glass surface treatment film, the component that is a conductive substance and is a polymer belongs to the conductive substance in the present invention. Accordingly, the polymer described herein is, for example, a non-conductive polymer.

### <<Water-soluble polymer>>

The water-soluble polymer is a polymer compound that dissolves in an amount of 1 g or more in 100 g of water at 25°C, preferably a polymer compound that dissolves in an amount of 5 g or more in 100 g of water at 25°C, and more preferably a polymer compound that dissolves in an amount of 10 g or more in 100 g of water at 25°C.

The water-soluble polymer is not particularly limited, and examples thereof include polyvinyl alcohol, water-soluble cellulose, polyethylene glycol (PEG), polyethylene oxide (PEO), polyvinyl pyrrolidone, polyacrylic acid, polystyrenesulfonic acid, and polyvinyl acetamide.

The polyvinyl alcohol is a polymer prepared by hydrolyzing polyvinyl acetate to change an acetyl group in the polyvinyl acetate molecule to a hydroxyl group. A value obtained by expressing the proportion of the hydroxyl group in mol% is referred to as a saponification degree. Known polyvinyl alcohols have various properties depending on their saponification degrees. For example, polyvinyl acetate (saponification degree: 0 mol%) is generally water-insoluble, and polyvinyl alcohol having a saponification degree of 100 mol% is known as water-soluble. In the case of polyvinyl alcohol having a saponification degree of 60 mol% or less among polyvinyl alcohols, the solubility in water is deteriorated. In the case of polyvinyl alcohol having a saponification degree of 30 mol% or less, the polyvinyl alcohol is not substantially dissolved. Conversely, when the saponification degree is too high, the solubility is low, and polyvinyl alcohol having a saponification degree of 85 to 90 mol% has the highest solubility. Polyvinyl alcohol having a saponification degree of 70 mol% or more is preferably used. In general, the higher the saponification degree, the better the water solubility. Thus, polyvinyl alcohol having a saponification degree of 75 mol% or more is preferably used. However, conversely, when the saponification degree is too high, the storage stability of the composition (generation of insoluble foreign matters) tends to be deteriorated. Thus, the saponification degree of polyvinyl alcohol is preferably 99 mol% or less, and more preferably 98 mol% or less.

The polymerization degree of polyvinyl alcohol is ordinarily represented by a viscosity of a 4 mass% aqueous solution (at 20°C), and the viscosity is generally about 1 to 80 cps (mPa·s). Among them, the polyvinyl alcohol preferably has a viscosity of 1 cps or more, and more preferably has a viscosity of 2 cps or more. The upper limit of the viscosity is preferably 70 cps, and the upper limit of the viscosity is more preferably 65 cps, 50 cps, 40 cps, 30 cps, 20 cps, 10 cps, 8 cps, or 5 cps. The viscosity range is, for example, 1 to 20 cps, 2 to 10 cps, or 3 to 8 cps.

The polyvinyl alcohol may be modified by substituting some of its hydroxyl groups with an alkyl ether group, an alkyloxymethyl group, an acetyl acetate group, or the like.

The water-soluble cellulose is not particularly limited, and examples thereof include alkylcelluloses such as methylcellulose and ethylcellulose; hydroxyalkylcelluloses such as hydroxyethylcellulose and hydroxypropylcellulose; and hydroxyalkylalkylcelluloses such as hydroxyethylmethylcellulose and hydroxypropylmethylcellulose.

Among these water-soluble celluloses, hydroxypropylcellulose is more preferred.

As the hydroxypropylcellulose, various products having different viscosities are commercially available from various companies, and any of them can be used in the present invention. The viscosity of a 2 mass% aqueous solution of hydroxypropylcellulose (at 20°C) is not particularly limited, and can be appropriately selected depending on the purpose. The viscosity is preferably 2.0 mPa·s (centipoise, cps) or more and 4,000 mPa·s (centipoise, cps) or less.

Further, the viscosity of hydroxypropylcellulose is considered to depend on the weight-average molecular weight, the degree of substitution, and the molecular weight of hydroxypropylcellulose.

The weight-average molecular weight of hydroxypropylcellulose is not particularly limited, and can be appropriately selected depending on the purpose. The weight-average molecular weight is preferably 15,000 or more and 400,000 or less. The weight-average molecular weight can be measured using, for example, gel permeation chromatography (GPC).

A commercially available product of hydroxypropylcellulose is not particularly limited, and can be appropriately selected depending on the purpose. Examples of the commercially available product include the following commercially available products.
· HPC-SSL having a molecular weight of 15,000 or more and 30,000 or less and a viscosity of 2.0 mPa·s or more and 2.9 mPa·s or less (manufactured by Nippon Soda Co., Ltd.)
· HPC-SL having a molecular weight of 30,000 or more and 50,000 or less and a viscosity of 3.0 mPa·s or more and 5.9 mPa·s or less (manufactured by Nippon Soda Co., Ltd.)
· HPC-L having a molecular weight of 55,000 or more and 70,000 or less and a viscosity of 6.0 mPa·s or more and 10.0 mPa·s or less (manufactured by Nippon Soda Co., Ltd.)
· HPC-M having a molecular weight of 110,000 or more and 150,000 or less and a viscosity of 150 mPa·s or more and 400 mPa·s or less (manufactured by Nippon Soda Co., Ltd.)
· HPC-H having a molecular weight of 250,000 or more and 400,000 or less and a viscosity of 1,000 mPa·s or more and 4,000 mPa·s or less (manufactured by Nippon Soda Co., Ltd.)
Among these commercially available products, HPC-SSL having a molecular weight of 15,000 or more and 30,000 or less and a viscosity of 2.0 mPa·s or more and 2.9 mPa·s or less is preferred.

In the commercially available products described above, the molecular weight is measured using gel permeation chromatography (GPC), and the viscosity is measured using a 2 mass% aqueous solution (at 20°C).

One type of water-soluble polymer may be used singly, or two or more types thereof may be used in combination.

### <<Alkali-soluble polymer>>

The alkali-soluble polymer is a polymer having an alkali-soluble group (e.g., a carboxy group, a sulfonic acid group, a phenolic hydroxyl group, an alcoholic hydroxyl group, an amino group), and may be any polymer that can be dissolved in an alkali aqueous solution.

Examples of the alkali aqueous solution include 2.38 mass% TMAH (tetramethylammonium hydroxide) aqueous solution.

Examples of the alkali-soluble polymer include an addition polymer of monomer containing a polymerizable unsaturated compound having an alkali-soluble group.

The addition polymer may be a homopolymer or a copolymer.

Examples of the polymerizable unsaturated compound having an alkali-soluble group include a polymerizable unsaturated compound having a carboxy group, a polymerizable unsaturated compound having an alcoholic hydroxyl group, and a polymerizable unsaturated compound having a phenolic hydroxyl group.

Examples of the polymerizable unsaturated compound having a carboxy group include: a monocarboxylic acid (e.g., acrylic acid, methacrylic acid, crotonic acid); a dicarboxylic acid (e.g., maleic acid, fumaric acid, citraconic acid, mesaconic acid, itaconic acid); or a (meth)acrylic acid derivative having a carboxy group and an ester bond (e.g., 2-succinoloylethyl(meth)acrylate, 2-maleinoloylethyl(meth)acrylate, 2-hexahydrophthaloylethyl(meth)acrylate).

Examples of the polymerizable unsaturated compound having an alcoholic hydroxyl group include: an aliphatic(meth)acrylate (e.g., 2-hydroxyethyl(meth)acrylate, 2-hydroxypropyl(meth)acrylate, 3-chloro-2 hydroxypropyl(meth)acrylate, 2-hydroxybutyl(meth)acrylate); or an aromatic(meth)acrylate(e.g., 2-hydroxy-3-phenoxypropyl(meth)acrylate, 2-hydroxy-3-(o-phenylphenoxy)propyl(meth)acrylate, 2-hydroxy-3-(1-naphthoxy)propyl(meth)acrylate, 2-hydroxy-3-(2-naphthoxy)propyl(meth)acrylate).

Examples of the polymerizable unsaturated compound having a phenolic hydroxyl group include hydroxystyrene.

The alkali-soluble polymer is preferably polyhydroxystyrene.

The polyhydroxystyrene may be a homopolymer of hydroxystyrene, a copolymer of hydroxystyrene and another monomer, a branched polyhydroxystyrene, or a modified polyhydroxystyrene. Examples of the branched polyhydroxystyrene include the branched polyhydroxystyrene described in WO2009/038126. Examples of the modified polyhydroxystyrene include the modified polyhydroxystyrene resin described in JP-A-2013-227364.

One kind of the alkali-soluble polymer may be used singly or two or more kinds thereof may be used in combination.

The content of the polymer in the composition for forming a glass surface treatment film is not particularly limited, but is preferably 10 mass% to 99 mass%, more preferably 50 mass% to 98 mass%, and particularly preferably 65 mass% to 95 mass% based on the film constituent.

### <Solvent>

The solvent is not particularly limited, and may be water or an organic solvent.

Examples of the organic solvent include alkylene glycol monoalkyl ether and a monocarboxylic acid ester of alkylene glycol monoalkyl ether.

Examples of the alkylene group of the alkylene glycol monoalkyl ether include a C₂₋₄ alkylene group.

Examples of the alkyl group of the alkylene glycol monoalkyl ether include a C₁₋₄ alkyl group.

The number of carbon atoms in the alkylene glycol monoalkyl ether is, for example, 3 to 8.

Examples of the alkylene glycol monoalkyl ether include ethylene glycol monomethyl ether, ethylene glycol monoethyl ether, propylene glycol monomethyl ether, and propylene glycol monoethyl ether.

Examples of the alkylene group in the monocarboxylic acid ester of an alkylene glycol monoalkyl ether include a C₂₋₄ alkylene group.

Examples of the alkyl group in the monocarboxylic acid ester of an alkylene glycol monoalkyl ether include a C₁₋₄ alkyl group.

Examples of the monocarboxylic acid in the monocarboxylic acid ester of an alkylene glycol monoalkyl ether include a C₂₋₄ saturated monocarboxylic acid.

Examples of the C₂₋₄ saturated monocarboxylic acid include acetic acid, propionic acid, and butyric acid.

The number of carbon atoms in the monocarboxylic acid ester of an alkylene glycol monoalkyl ether is, for example, 5 to 10.

Examples of the monocarboxylic acid ester of an alkylene glycol monoalkyl ether include methyl cellosolve acetate, ethyl cellosolve acetate, propylene glycol monomethyl ether acetate, and propylene glycol propyl ether acetate.

Examples of the other organic solvent include diethylene glycol monomethyl ether, diethylene glycol monoethyl ether, propylene glycol, toluene, xylene, methyl ethyl ketone, methyl isobutyl ketone, cyclopentanone, cyclohexanone, cycloheptanone, 4-methyl-2-pentanol, methyl 2-hydroxyisobutyrate, ethyl 2-hydroxyisobutyrate, ethyl ethoxyacetate, 2-hydroxyethyl acetate, methyl 3-methoxypropionate, ethyl 3-methoxypropionate, ethyl 3-ethoxypropionate, methyl 3-ethoxypropionate, methyl pyruvate, ethyl pyruvate, ethyl acetate, butyl acetate, ethyl lactate, butyl lactate, 2-heptanone, methoxycyclopentane, anisole, γ-butyrolactone, N-methylpyrrolidone, N,N-dimethylformamide, and N,N-dimethylacetamide.

Among these solvents, alkylene glycol monoalkyl ether, a monocarboxylic acid ester of alkylene glycol monoalkyl ether, or water is preferable.

One kind of these solvents may be used singly or two or more kinds thereof may be used in combination.

The mass ratio of the organic solvent in the solvent is not particularly limited, but is preferably 50 mass% to 100 mass%.

The content of the solvent in the composition for forming a glass surface treatment film is not particularly limited, but is preferably 50 mass% to 99.9 mass%, more preferably 75 mass% to 99.5 mass%, and particularly preferably 90 mass% to 99 mass%.

### <Crosslinking Agent>

The composition for forming a glass surface treatment film may contain a crosslinking agent in order to enhance the solvent resistance of the glass surface treatment film to be formed.

Note that the crosslinking agent is a substance different from the above-described conductive substance or polymer.

The crosslinking agent is not particularly limited.

Examples of the crosslinking agent include compounds having two or more of the following structures.

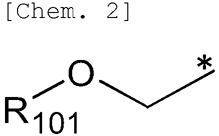

(In the structure, R₁₀₁ represents a hydrogen atom, a C₁₋₄ alkyl group, or a C₂₋₆ alkoxyalkyl group; and the asterisk * represents a bond.)

The bond is bonded to, for example, a nitrogen atom, a carbon atom included in an aromatic hydrocarbon ring, or the like.

As R₁₀₁, a hydrogen atom, a methyl group, an ethyl group, or a group represented by the following structure is preferable.

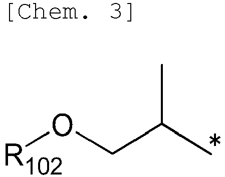

In the structure, R₁₀₂ represents a hydrogen atom, a methyl group, or an ethyl group, and the asterisk * represents a bond.

The crosslinking agent is preferably a melamine compound, a guanamine compound, a glycoluril compound, a urea compound, or a compound having a phenolic hydroxy group. One type of these can be used singly or two or more types thereof can be used in combination.

The melamine compound is not particularly limited as long as it is a melamine compound having a group that can react with a hydroxy group.

Examples of the melamine compound include hexamethylolmelamine, hexamethoxymethylmelamine, a compound in which 1 to 6 methylol groups of hexamethylolmelamine are methoxymethylated or a mixture thereof, hexamethoxyethylmelamine, hexaacyloxymethylmelamine, and a compound in which 1 to 6 methylol groups of hexamethylolmelamine are acyloxymethylated or a mixture thereof.

The guanamine compound is not particularly limited as long as it is a guanamine compound having a group that can react with a hydroxy group.

Examples of the guanamine compound include tetramethylolguanamine, tetramethoxymethylguanamine, a compound in which 1 to 4 methylol groups of tetramethylolguanamine are methoxymethylated or a mixture thereof, tetramethoxyethylguanamine, tetraacyloxyguanamine, and a compound in which 1 to 4 methylol groups of tetramethylolguanamine are acyloxymethylated or a mixture thereof.

The glycoluril compound is not particularly limited as long as it is a glycoluril compound having a group that can react with a hydroxy group.

Examples of the glycoluril compound include tetramethylolglycoluril, tetramethoxyglycoluril, tetramethoxymethylglycoluril, a compound in which 1 to 4 methylol groups of tetramethylolglycoluril are methoxymethylated or a mixture thereof, and a compound in which 1 to 4 methylol groups of tetramethylolglycoluril are acyloxymethylated or a mixture thereof.

The glycoluril compound may be, for example, a glycoluril derivative represented by formula (1E) below.

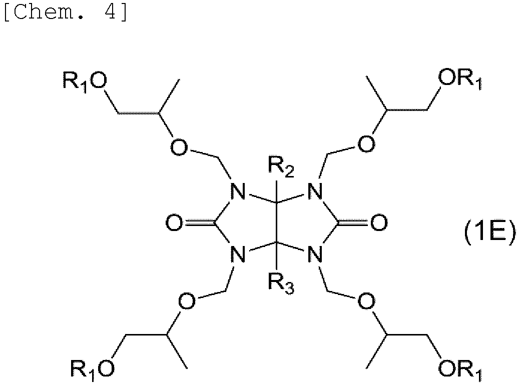

(In Formula (1E), four R₁ moieties each independently represent a methyl group or an ethyl group, and R₂ and R₃ each independently represent a hydrogen atom, a C₁₋₄ alkyl group, or a phenyl group.)

Examples of the glycoluril derivative represented by formula (1E) include compounds represented by formulae (1E-1) to (1E-6) below.

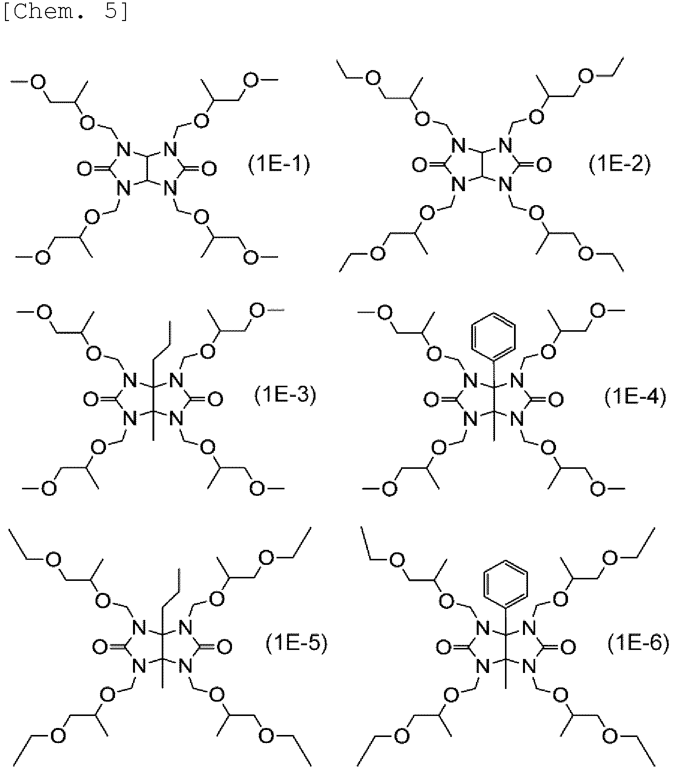

The glycoluril derivative represented by formula (1E) is obtained by, for example, allowing a glycoluril derivative represented by formula (2E) below to react with at least one type of compound represented by formula (3d) below.

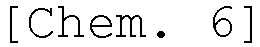

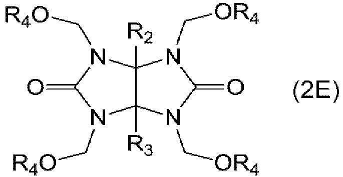

(In Formula (2E), R₂ and R₃ each independently represent a hydrogen atom, a C₁₋₄ alkyl group, or a phenyl group, and R₄ moieties each independently represent a C₁₋₄ alkyl group.) 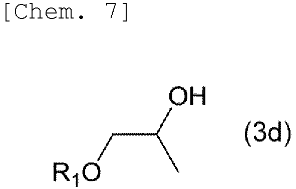 where in Formula (3d), R₁ represents a methyl group or an ethyl group.

Examples of the glycoluril derivative represented by formula (2E) include compounds represented by formulae (2E-1) to (2E-4) below. Examples of the compound represented by formula (3d) include compounds represented by formula (3d-1) and formula (3d-2) below.

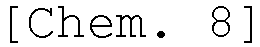

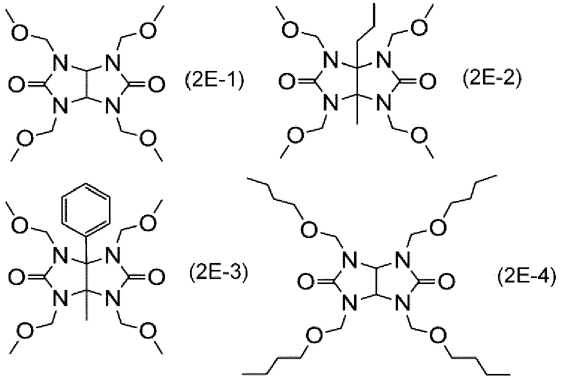

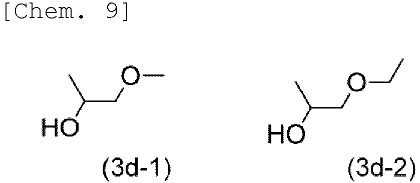

The urea compound is not particularly limited as long as it is a urea compound having a group that can react with a hydroxy group.

Examples of the urea compound include tetramethylol urea, tetramethoxy methyl urea, a compound in which 1 to 4 methylol groups of tetramethylol urea are methoxymethylated or a mixture thereof, and tetramethoxy ethyl urea.

Examples of the compound having a phenolic hydroxy group include compounds represented by formula (111) or formula (112) below.

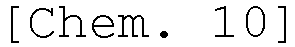

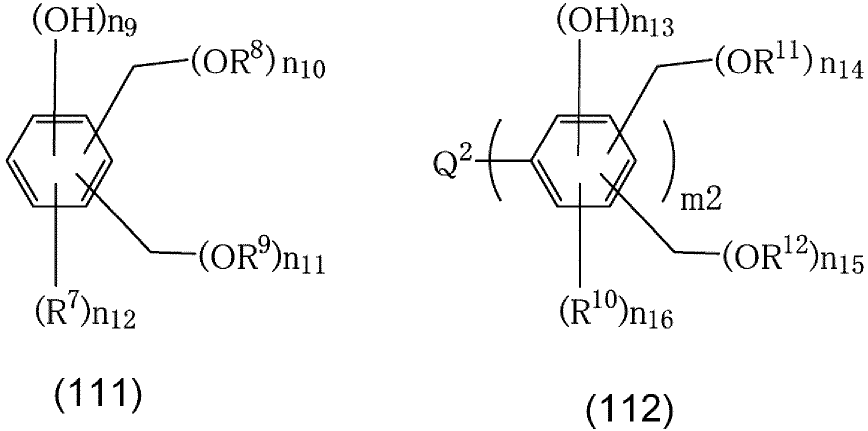

In formula (111) and formula (112), Q² represents a single bond or an m2-valent organic group,
R⁸, R⁹, R¹¹, and R¹² each represent a hydrogen atom or a methyl group,
R⁷ and R¹⁰ each represent a C₁₋₁₀ alkyl group or a C₆₋₄₀ aryl group,
n₉ represents an integer of 1 ≤ n₉ ≤ 3, n₁₀ represents an integer of 2 ≤ n₁₀ ≤ 5, n₁₁ represents an integer of 0 ≤ n₁₁ ≤ 3, and n₁₂ represents an integer of 0 ≤ n₁₂ ≤ 3, and the integers meet 3 ≤ (n₉ + n₁ + n₁₁ + n₁₂) ≤ 6,
n₁₃ represents an integer of 1 ≤ n₁₃ ≤ 3, n₁₄ represents an integer of 1 ≤ n₁₄ ≤ 4, n₁₅ represents an integer of 0 ≤ n₁₅ ≤ 3, and n₁₆ represents an integer of 0 ≤ n₁₆ ≤ 3, and the integers meet 2 ≤ (n₁₃ + n₁₄ + n₁₅ + n₁₆) ≤ 5; and
m2 represents an integer of 2 to 10.

Examples of the m2-valent organic group in Q² include a C₁₋₄ m2-valent organic group.

Examples of the compound represented by formula (111) or formula (112) include the following compounds.

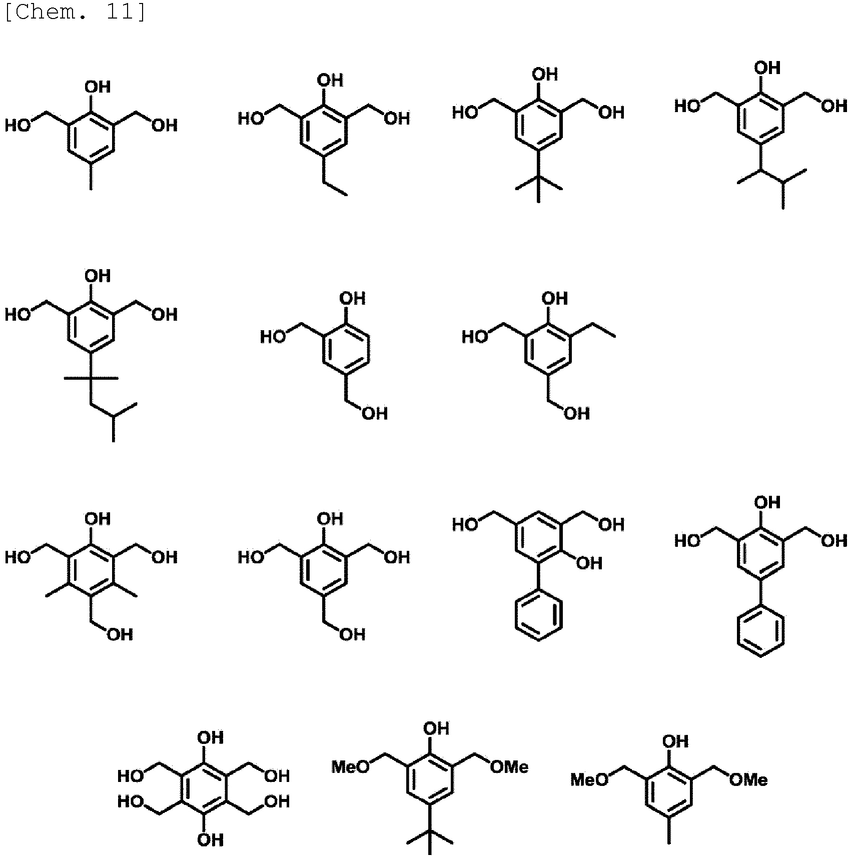

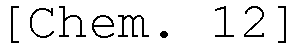

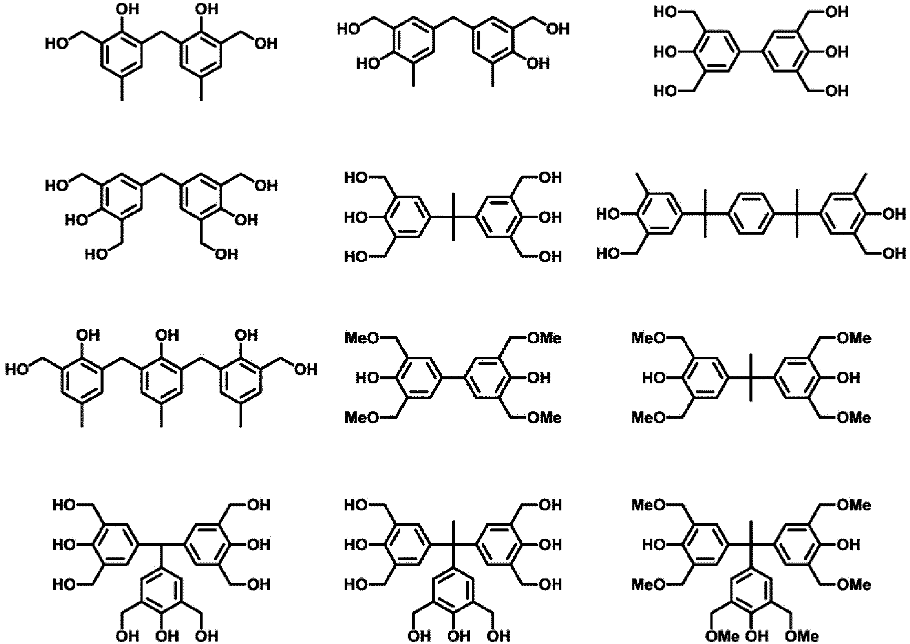

The compounds are available as products of Asahi Organic Chemicals Industry Co., Ltd. and Honshu Chemical Industry Co., Ltd. Examples of the products include TMOM-BP (trade name) manufactured by Asahi Organic Chemicals Industry Co., Ltd.

Among the compounds, the glycoluril compound is preferable. Specifically, tetramethylolglycoluril, tetramethoxyglycoluril, tetramethoxymethylglycoluril, a compound in which 1 to 4 methylol groups of tetramethylolglycoluril are methoxymethylated or a mixture thereof, and a compound in which 1 to 4 methylol groups of tetramethylolglycoluril are acyloxymethylated or a mixture thereof are preferable, and tetramethoxymethylglycoluril is preferable.

The molecular weight of the crosslinking agent is not particularly limited, and is preferably 500 or less.

The content of the crosslinking agent in the composition for forming a glass surface treatment film is not particularly limited, and is, for example, 1 mass% to 50 mass%, and preferably 5 mass% to 40 mass% based on the film constituent.

### <Acid Generator>

As the acid generator contained as an optional component in the composition for forming a glass surface treatment film, both a thermal acid generator and a photoacid generator can be used. Preferably, the thermal acid generator is used.

Examples of the thermal acid generator include sulfonic acid compounds and carboxylic acid compounds such as p-toluenesulfonic acid, trifluoromethanesulfonic acid, pyridinium-p-toluenesulfonate (pyridinium-p-toluenesulfonic acid), pyridinium phenol sulfonic acid, pyridinium-p-hydroxybenzenesulfonic acid (pyridinium p-phenolsulfonic acid salt), pyridinium-trifluoromethanesulfonic acid, salicylic acid, camphorsulfonic acid, 5-sulfosalicylic acid, 4-chlorobenzenesulfonic acid, 4-hydroxybenzenesulfonic acid, benzenedisulfonic acid, 1-naphthalenesulfonic acid, citric acid, benzoic acid, and hydroxybenzoic acid.

Examples of the photoacid generator include an onium salt compound, a sulfonimide compound, and a disulfonyl diazomethane compound.

Examples of the onium salt compound include iodonium salt compounds such as diphenyliodonium hexafluorophosphate, diphenyliodonium trifluoromethanesulfonate, diphenyliodonium nonafluoronormalbutanesulfonate, diphenyliodonium perfluoronormaloctanesulfonate, diphenyliodonium camphorsulfonate, bis(4-tert-butylphenyl)iodonium camphorsulfonate, and bis(4-tert-butylphenyl)iodonium trifluoromethanesulfonate; and sulfonium salt compounds such as triphenylsulfonium hexafluoroantimonate, triphenylsulfonium nonafluoronormalbutanesulfonate, triphenylsulfonium camphorsulfonate, and triphenylsulfonium trifluoromethanesulfonate.

Examples of the sulfonimide compound include N-(trifluoromethanesulfonyloxy)succinimide, N-(nonafluoronormalbutanesulfonyloxy)succinimide, N-(camphorsulfonyloxy)succinimide, and N-(trifluoromethanesulfonyloxy)naphthalimide.

Examples of the disulfonyl diazomethane compound include bis(trifluoromethylsulfonyl)diazomethane, bis(cyclohexylsulfonyl)diazomethane, bis(phenylsulfonyl)diazomethane, bis(p-toluenesulfonyl)diazomethane, bis(2,4-dimethylbenzenesulfonyl)diazomethane, and methylsulfonyl-p-toluenesulfonyl diazomethane.

The acid generators can be used singly or in combination of two or more kinds thereof.

When an acid generator is used, the content ratio of the acid generator is, for example, 0.1 mass% to 50 mass%, and preferably 1 mass% to 30 mass% based on the crosslinking agent.

### <Photoabsorber>

The composition for forming a glass surface treatment film may contain a photoabsorber.

When the composition for forming a glass surface treatment film contains a photoabsorber, the position of the glass substrate can be checked by irradiating the glass substrate, on which the glass surface treatment film is disposed, with light (light corresponding to the photoabsorber). Thus, positioning (alignment) of the glass substrate becomes easy.

The photoabsorber preferably has a maximum absorbance at 450 to 750 nm, and more preferably has a maximum absorbance at 620 to 750 nm.

Examples of the photoabsorber include a black dye, a red dye, a yellow dye, and a blue dye. These examples that can be used include the following commercially available products:
Titanium Black: 12S, 13M, 13M-C (manufactured by Mitsubishi Materials Corporation);
black dyes: VALIFAST BLACK 1807, 1821, 3804, 3810, 3820, 2830,2840, 3866, 3870, Oil Black 803, 830, 860, BS, HBB, NO5 (manufactured by Orient Chemical Industries Co., Ltd.), Aizen Spilon Black MHS-Liquid (manufactured by Hodogaya Chemical Co., Ltd.);
red dyes: VALIFAST RED 1308, 1320, 1355, 1360, 1364, 1388, 2320, 3108, 3304, 3306, 3311, 3312, 3320, OIL RED 330, 5B, OG, RR (manufactured by Orient Chemical Industries Co., Ltd.), Aizen Spilon Red BEH S-Liquid (manufactured by Hodogaya Chemical Co., Ltd.);
yellow dyes: VALIFAST YELLOW 1101, 1108,1109,1151, 1171, 3108, 3120, 3150, 3170, 3180, 4120, 4121, OIL YELLOW 107, 129, 136, 3G, GG-S (manufactured by Orient Chemical Industries Co., Ltd.), Aizen Spilon Yellow RH S-Liquid (manufactured by Hodogaya Chemical Co., Ltd.); or
blue dyes: VALIFAST BLUE 1063, 1605, 1621, 2606, 2620, 2650, 2670, OIL BLUE 2N, 613, 630, 650M (manufactured by Orient Chemical Industries Co., Ltd.).

The content of the photoabsorber in the composition for forming a glass surface treatment film is not particularly limited, but is, for example, 0.1 mass% to 10 mass% and preferably 1 mass% to 5 mass% based on the film constituent.

### (Glass surface treatment film)

The glass surface treatment film of the present invention is formed from the composition for forming a glass surface treatment film of the present invention.

The glass surface treatment film may be formed, for example, by applying a composition for forming a glass surface treatment film onto a surface of a glass substrate and drying the composition.

The coating method is not particularly limited, and examples thereof include various wet processes.

Examples of the coating method include drop casting, spin coating, blade coating, dip coating, roll coating, bar coating, die coating, an inkjet method, and a printing method (e.g., relief printing, intaglio printing, planographic printing, screen printing).

The drying temperature is not particularly limited, and is, for example, 30°C to 120°C.

The drying time is not particularly limited, and is, for example, 10 seconds to 10 minutes.

The film thickness of the glass surface treatment film is not particularly limited, but is preferably 10 nm to 10 µm, more preferably 20 nm to 5 µm, and particularly preferably 50 nm to 1 µm.

The film thickness of the glass surface treatment film may be measured using, for example, an optical interference method. As the measuring apparatus, for example, F-50, manufactured by Filmetrics KLA Corporation, may be used.

The glass surface treatment film may be formed on a surface of a glass substrate, thereby lowering the surface resistivity of the surface. As a result, the holding of the glass substrate by using the electrostatic adsorption method can be facilitated.

The surface resistivity of the glass surface treatment film is, for example, preferably 1.0 × 10¹² Ω/□ or less and more preferably 5.0 × 10¹¹ Ω/□ or less. The surface resistivity of the glass surface treatment film may be 1.0 × 10⁴ Ω/□ or more, 1.0 × 10⁶ Ω/□ or more, or 1.0 × 10⁸ Ω/□ or more.

In addition, the surface resistivity (SR) of the glass surface treatment film is provided such that the ratio (SR/SR_{G}) of the surface resistivity (SR) to the surface resistivity (SR_{G}) of the glass substrate on which the glass surface treatment film is disposed is preferably 1/10 or less in terms of the surface resistivity and more preferably 1/10² or less in terms of the surface resistivity. The lower limit of the ratio (SR/SR_{G}) is not particularly limited, but the ratio (SR/SR_{G}) may be 1/10⁸ or more, 1/10⁶ or more, or 1/10⁴ or more.

### (Laminate)

The laminate of the present invention includes a glass substrate and the glass surface treatment film of the present invention.

In the laminate, the glass surface treatment film may be formed on one surface or both surfaces of the glass substrate. When the glass surface treatment films are formed on both surfaces of the glass substrate, the glass surface treatment films may have the same composition or different compositions and may have the same film thickness or different film thicknesses.

The material of the glass substrate is not particularly limited, and examples thereof include alkali-free glass or silica glass.

The size of the glass substrate is not particularly limited.

The film thickness of the glass substrate is not particularly limited, and is, for example, preferably 100 µm to 5 mm, more preferably 200 µm to 2 mm, and particularly preferably 500 µm to 1 mm.

The surface of the glass substrate may be flat or may have irregularities.

The size of the irregularities is not particularly limited.

The irregularities may be, for example, irregularities formed by various processing.

The surface of the glass substrate may be subjected to various processing.

Examples of the processing include semiconductor formation processing, electrode formation processing, and light emitting element formation processing.

### (Method for producing laminate)

The method for producing a laminate according to the present invention includes the step of forming a glass surface treatment film on a surface of a glass substrate by using the composition for forming a glass surface treatment film of the present invention.

Examples of the method for forming a glass surface treatment film include the formation method described in the description of the glass surface treatment film of the present invention.

Examples of an embodiment of the glass substrate include a form of the glass substrate exemplified in the description of the laminate of the present invention.

Examples of an embodiment of the glass surface treatment film include a form described in the description of the glass surface treatment film of the present invention.

### (Method of removing glass surface treatment film)

The method of removing a glass surface treatment film according to the present invention includes a step of applying a removal liquid to a laminate of the present invention to remove a glass surface treatment film from a glass substrate.

Examples of the removal liquid include water, an aqueous alkaline solution, or an organic solvent. Preferred is water or an aqueousalkaline solution.

Examples of the water include ion-exchanged water or pure water. The pH of water is usually 7.0.

Examples of the aqueous alkaline solution include an aqueous alkaline solution obtained by dissolving at least one alkaline compound such as sodium hydroxide, potassium hydroxide, sodium carbonate, sodium silicate, sodium metasilicate, ammonia water, ethylamine, n-propylamine, diethylamine, di-n-propylamine, triethylamine, methyldiethylamine, ethyldimethylamine, triethanolamine, tetramethylammonium hydroxide (TMAH), pyrrole, piperidine, choline, 1,8-diazabicyclo-[5.4.0]-7-undecene, or 1,5-diazabicyclo-[4.3.0]-5-nonene.

The method of applying a removing liquid to a laminate is not particularly limited, and examples thereof include an immersion method or a spray method.

The immersion time in the immersion method is not particularly limited.

The amount used in the spray method is not particularly limited.

The removal liquid may be at room temperature or about 30°C to 40°C.

Examples of the holding of a glass substrate by using an electrostatic adsorption method include holding when processing a glass substrate, or holding when moving or transferring a glass substrate.

By holding a glass substrate by the electrostatic adsorption method, for example, the glass substrate can be held with high positional accuracy when processing the glass substrate or when moving or transferring the glass substrate.

In the electrostatic adsorption member for electrostatically adsorbing a glass substrate, for example, an electrode layer for electrostatic adsorption is provided inside a dielectric member made of ceramic or the like. The electrostatic adsorption member has, for example, an adsorption surface on which the glass substrate is electrostatically adsorbed. The electrostatic adsorption member may have, for example, a belt shape.

The movement or transfer of the glass substrate by using the electrostatic adsorption method may be, for example, belt conveyor transfer using a belt-shaped electrostatic adsorption member, or movement or transfer using a robot arm in which the electrostatic absorption member is attached to the distal end of the arm.

### Examples

Hereinafter, the present invention will be more specifically described with reference to Examples, but the present invention is not limited to the following Examples. Note that the apparatuses used are as follows.

### [Apparatus]

(1) Surface resistance meter: MEGARESTAII, manufactured by SHISHIDO ELECTROSTATIC, LTD.
(2) Optical film thickness meter: F-50 manufactured by Filmetrics KLA Corporation.
(3) Electrostatic chuck: Handy type, Soft Palm, manufactured by TSUKUBASEIKO Co., Ltd.

### [1] To prepare composition for forming a glass surface treatment film

### <Preparation Example 1>

First, 1.0 g of polyhydroxystyrene (VP-15000, manufactured by NIPPON SODA CO., LTD.) was admixed with 0.1 g of a surfactant (n-dodecylbenzenesulfonic acid, manufactured by KANTO KAGAKU) and 42.9 g of a solvent (propylene glycol monomethyl ether) to prepare a composition for forming a glass surface treatment film.

### <Preparation Example 2>

First, 1.0 g of polyhydroxystyrene (VP-15000, manufactured by NIPPON SODA CO., LTD.) was admixed with 0.3 g of a surfactant (n-dodecylbenzenesulfonic acid, manufactured by KANTO KAGAKU) and 50.7 g of a solvent (propylene glycol monomethyl ether) to prepare a composition for forming a glass surface treatment film.

### <Preparation Example 3>

First, 1.0 g of polyhydroxystyrene (VP-15000, manufactured by NIPPON SODA CO., LTD.) was admixed with 0.1 g of an anion polymer (polystyrene sulfonic acid, manufactured by Aldrich) and 42.9 g of a mixed solvent (pure water/propylene glycol monomethyl ether = 3/7 (wt/wt)) to prepare a composition for forming a glass surface treatment film.

### <Preparation Example 4>

First, 1.0 g of polyvinylpyrrolidone (manufactured by Tokyo Chemical Industry Co., Ltd.) was admixed with 0.1 g of a surfactant (n-dodecylbenzenesulfonic acid, manufactured by KANTO KAGAKU) and 42.9 g of a solvent (propylene glycol monomethyl ether) to prepare a composition for forming a glass surface treatment film.

### <Preparation Example 5>

First, 1.0 g of polyvinylpyrrolidone (manufactured by Tokyo Chemical Industry Co., Ltd.) was admixed with 0.3 g of a surfactant (n-dodecylbenzenesulfonic acid, manufactured by KANTO KAGAKU) and 50.7 g of a solvent (propylene glycol monomethyl ether) to prepare a composition for forming a glass surface treatment film.

### <Preparation Example 6>

First, 1.0 g of polyvinylpyrrolidone (manufactured by Tokyo Chemical Industry Co., Ltd.) was admixed with 0.1 g of an anion polymer (polystyrene sulfonic acid, manufactured by Aldrich) and 42.9 g of a mixed solvent (pure water/propylene glycol monomethyl ether = 3/7 (wt/wt)) to prepare a composition for forming a glass surface treatment film.

### <Preparation Example 7>

First, 1.0 g of polyvinylpyrrolidone (manufactured by Tokyo Chemical Industry Co., Ltd.) was admixed with 0.3 g of an anion polymer (polystyrene sulfonic acid, manufactured by Aldrich) and 50.7 g of a mixed solvent (pure water/propylene glycol monomethyl ether = 3/7 (wt/wt)) to prepare a composition for forming a glass surface treatment film.

### <Preparation Example 8>

First, 1.0 g of polyhydroxystyrene (VP-15000, manufactured by NIPPON SODA CO., LTD.) was admixed with 39.0 g of a solvent (propylene glycol monomethyl ether) to prepare a composition for forming a glass surface treatment film.

### <Preparation Example 9>

First, 1.0 g of polyvinylpyrrolidone (manufactured by Tokyo Chemical Industry Co., Ltd.) was admixed with 39.0 g of a solvent (propylene glycol monomethyl ether) to prepare a composition for forming a glass surface treatment film.

### <Preparation Example 10>

First, 1.0 g of polyhydroxystyrene (VP-15000, manufactured by NIPPON SODA CO., LTD.) was admixed with 0.3 g of a surfactant (dinonylnaphthalenedisulfonic acid, manufactured by Kusumoto Chemicals, Ltd.), 41.6 g of a solvent (propylene glycol monomethyl ether), and 0.42 g of a solvent (isobutyl alcohol) to prepare a composition for forming a glass surface treatment film.

### <Preparation Example 11>

First, 1.0 g of polyhydroxystyrene (VP-8000, manufactured by NIPPON SODA CO., LTD.) was admixed with 0.1 g of an anion polymer (polystyrene sulfonic acid (PS-1H), manufactured by Tosoh Finechem Corporation) and 42.9 g of a mixed solvent (pure water/propylene glycol monomethyl ether =1/9 (wt/wt)) to prepare a composition for forming a glass surface treatment film.

### <Preparation Example 12>

First, 1.0 g of polyhydroxystyrene (VP-8000, manufactured by NIPPON SODA CO., LTD.) was admixed with 0.3 g of an anion polymer (polystyrene sulfonic acid (PS-1H), manufactured by Tosoh Finechem Corporation) and 50.7 g of a mixed solvent (pure water/propylene glycol monomethyl ether =1/9 (wt/wt)) to prepare a composition for forming a glass surface treatment film.

### <Preparation Example 13>

First, 1.0 g of polyhydroxystyrene (VP-8000, manufactured by NIPPON SODA CO., LTD.) was admixed with 0.2 g of an anion polymer (polystyrene sulfonic acid (PS-1H), manufactured by Tosoh Finechem Corporation) and 6.8 g of a mixed solvent (pure water/propylene glycol monomethyl ether = 3/7 (wt/wt)) to prepare a composition for forming a glass surface treatment film.

### <Examples 1 to 8 and Comparative Examples 1 and 2> [2] To measure surface resistivity of film

The composition for forming a glass surface treatment films obtained in Preparation Examples 1 to 13 were each spin-coated on a 4-inch glass wafer (Eagle XG manufactured by Corning) so that the final film thickness was 100 nm, and heated at 90°C for 1 minute to form a glass surface treatment film on the glass wafer. A surface resistance meter (measurement voltage: 500 V) was used to bring a probe into contact with the glass wafer having the glass surface treatment film formed thereon from the glass surface treatment film side. The surface resistivity at 60 seconds after the contact was then measured. The results are shown in Table 1.

### [3] To evaluate electrostatic adsorption performance

The composition for forming a glass surface treatment films obtained in Preparation Examples 1 to 13 were each spin-coated on a 4-inch glass wafer (Eagle XG manufactured by Corning) so that the final film thickness was 100 nm, and heated at 90°C for 1 minute to form a glass surface treatment film on the glass wafer. A handy-type electrostatic chuck (Soft Palm, manufactured by TSUKUBASEIKO Co., Ltd.; applied voltage: 0.3 kV), was used to bring the electrostatic chuck into contact with the glass wafer having the glass surface treatment film from the glass surface treatment film side. After the glass wafer was lifted in the vertical direction, the glass wafer was tilted in the vertical direction to evaluate the electrostatic adsorption performance. Those adsorbed are designated as "o", and those not adsorbed are designated as "×". The results are shown in Table 1.

### [4] To check film solubility in alkali aqueous solution

The composition for forming a glass surface treatment films obtained in Preparation Examples 1 to 3, 8, and 10 to 13 were each spin-coated on a 4-inch silicon wafer so that the final film thickness was 100 nm, and heated at 90°C for 1 minute to form a glass surface treatment film on the silicon wafer. Thereafter, the obtained laminate was cut into a 3-cm square to prepare a test substrate.

The film thickness of the prepared test substrate was measured (film thickness before immersion). Then, each film, together with the substrate, was immersed in NMD-3 (the component is a 2.38 mass% tetramethylammonium hydroxide aqueous solution, manufactured by TOKYO OHKA KOGYO CO., LTD.) for 1 minute. After drying with an air gun, the film thickness of each film was measured again (film thickness after immersion).

The residual film rate (%) by immersion was calculated by the following formula. Residual film rate (%) = [film thickness after immersion (nm)/film thickness before immersion (nm)] × 100.

The results are shown in Table 2.

### [5] To check film solubility in pure water

The composition for forming a glass surface treatment films obtained in Preparation Examples 4 to 7 and 9 were each spin-coated on a 4-inch silicon wafer so that the final film thickness was 100 nm, and heated at 90°C for 1 minute to form a glass surface treatment film on the silicon wafer. Thereafter, the obtained laminate was cut into a 3-cm square to prepare a test substrate.

The film thickness of the prepared test substrate was measured (film thickness before immersion). Then, each film, together with the substrate, was immersed in pure water for 1 minute. After drying with an air gun, the film thickness of each film was measured again (film thickness after immersion).

The residual film rate (%) by immersion was calculated by the following formula. Residual film rate (%) = [film thickness after immersion (nm)/film thickness before immersion (nm)] × 100.

The results are shown in Table 3.

### <Comparative Example 3>

### [6] To measure surface resistivity of film

A surface resistance meter (measurement voltage: 500 V) was used to bring a probe into contact with a surface of a 4-inch glass wafer (Eagle XG, manufactured by Corning). The surface resistivity at 60 seconds after the contact was then measured. The results are shown in Table 1.

### [7] To evaluate electrostatic adsorption performance

A handy-type electrostatic chuck (Soft Palm, manufactured by TSUKUBASEIKO Co., Ltd.; applied voltage: 0.3 kV), was used to bring the electrostatic chuck into contact with a 4-inch glass wafer (Eagle XG, manufactured by Corning). After the glass wafer was lifted in the vertical direction, the glass wafer was tilted in the vertical direction to evaluate the electrostatic adsorption performance. Those adsorbed are designated as "o", and those not adsorbed are designated as "x". The results are shown in Table 1.

**[Table 1]**

| | Composition | Surface resistivity (Ω/□) | Electrostatic adsorption performance |
|---|---|---|---|
| Example 1 | Preparation Example 1 | 1.6 × 1011 | ○ |
| Example 2 | Preparation Example 2 | 1.7 × 10¹⁰ | ○ |
| Example 3 | Preparation Example 3 | 2.9 × 1011 | ○ |
| Example 4 | Preparation Example 4 | 3.0 × 1010 | ○ |
| Example 5 | Preparation Example 5 | 8.5 × 10⁹ | ○ |
| Example 6 | Preparation Example 6 | 9.5 × 10⁹ | ○ |
| Example 7 | Preparation Example 7 | 9.1 × 10⁸ | ○ |
| Example 8 | Preparation Example 10 | 5.3 × 10⁹ | ○ |
| Example 9 | Preparation Example 11 | 7.4 × 1010 | ○ |
| Example 10 | Preparation Example 12 | 3.2 × 10⁸ | ○ |
| Example 11 | Preparation Example 13 | 3.8 × 10⁷ | ○ |
| Comparative Example 1 | Preparation Example 8 | > 9.9 × 1012 | × |
| Comparative Example 2 | Preparation Example 9 | > 9.9 × 1012 | × |
| Comparative Example 3 | None | > 9.9 × 1012 | × |

**[Table 2]**

| | Composition | Film solubility NMD-3 (%) |
|---|---|---|
| Example 1 | Preparation Example 1 | < 5 |
| Example 2 | Preparation Example 2 | < 5 |
| Example 3 | Preparation Example 3 | < 5 |
| Example 8 | Preparation Example 10 | < 5 |
| Example 9 | Preparation Example 11 | < 5 |
| Example 10 | Preparation Example 12 | < 5 |
| Example 11 | Preparation Example 13 | < 5 |
| Comparative Example 1 | Preparation Example 8 | < 5 |

**[Table 3]**

| | Composition | Film solubility Pure water (%) |
|---|---|---|
| Example 4 | Preparation Example 4 | < 5 |
| Example 5 | Preparation Example 5 | < 5 |
| Example 6 | Preparation Example 6 | < 5 |
| Example 7 | Preparation Example 7 | < 5 |
| Comparative Example 2 | Preparation Example 9 | < 5 |

## Claims

1. A composition for forming a glass surface treatment film, comprising a conductive substance and a solvent, wherein the glass surface treatment film is used to hold a glass substrate by an electrostatic adsorption method.

2. The composition for forming a glass surface treatment film according to claim 1, further comprising a polymer.

3. The composition for forming a glass surface treatment film according to claim 2, wherein the polymer is a water-soluble polymer or an alkali-soluble polymer.

4. The composition for forming a glass surface treatment film according to claim 1, wherein the conductive substance is at least one material selected from the group consisting of surfactants and ionic liquids.

5. The composition for forming a glass surface treatment film according to claim 1, wherein the conductive substance is a conductive polymer.

6. The composition for forming a glass surface treatment film according to claim 1, wherein the conductive substance is at least one material selected from the group consisting of carbon-based, metal-based, metal-oxide-based, metal-coated, and metal-oxide-coated conductive fillers.

7. The composition for forming a glass surface treatment film according to claim 1, wherein the solvent contains at least one material selected from the group consisting of alkylene glycol monoalkyl ethers,monocarboxylic acid esters of alkylene glycol monoalkyl ethers, and water.

8. The composition for forming a glass surface treatment film according to claim 1, further comprising a crosslinking agent.

9. A glass surface treatment film formed from the composition for forming a glass surface treatment film according to any one of claims 1 to 8.

10. A laminate comprising a glass substrate and the glass surface treatment film according to claim 9.

11. A method for producing a laminate, the method comprising the step of forming a glass surface treatment film on a surface of a glass substrate by using the composition for forming a glass surface treatment film according to any one of claims 1 to 8.

12. A method of removing a glass surface treatment film, comprising the step of applying a removal liquid, namely either water or an alkali aqueous solution, to the laminate according to claim 10 to remove the glass surface treatment film from the glass substrate.
